# EUROPEAN PATENT APPLICATION

(11) **EP 4 660 634 A1**
(43) Date of publication of application: **10.12.2025**
(21) Application number: 23919947.4
(22) Date of filing: 13.12.2023
(51) Int. Cl.: G01N 35/10, G01N 35/02

(54) **AUTOMATIC ANALYSIS DEVICE**

(30) Priority: 03.02.2023 JP 2023015277
(71) Applicant: HITACHI HIGH-TECH CORPORATION, Tokyo 105-6409 (JP)
(72) Inventor: FUKUYAMA Yuto, Tokyo 105-6409 (JP); MIYAKE Yuka, Tokyo 105-6409 (JP)
(74) Representative: Strehl & Partner mbB
(86) International application number: PCT/JP2023/044727
(87) International publication number: WO 2024/161812

(57) **Abstract**

To provide an automatic analyzer that does not deteriorate a throughput by avoiding carry-over when a plurality of reagents are dispensed by using one dispensing probe. An automatic analyzer that dispenses a plurality of reagents by using one dispensing probe to analyze a sample, includes a classifying unit that classifies a plurality of processes including the dispensation of the reagents into the first processing that requires a pre-cleaning performed on the dispensing probe just before or after the dispensation and second processing that requires no pre-cleaning, and a determining unit that determines an execution time of the first processing and then determines the execution time of the second processing.

## Description

### Technical Field

The present invention relates to an automatic analyzer.

### Background Art

The automatic analyzer for analyzing a sample such as blood and urine collected from a patient is configured to dispense the sample and a reagent. Specifically, a dispensing probe is used for aspirating the sample from a sample container, aspirating the reagent from a reagent container, and discharging the sample and the reagent into a reaction container.

Patent Literature 1 discloses the automatic analyzer which avoids mixture of the reagent remaining inside the dispensing probe with the sample in the sample container, so-called carry-over, when discharging the reagent and the sample into the reaction container from the dispensing probe that has been used for aspiration of the reagent, cleaning of the outside, and aspiration of the sample.

### Citation List

### Patent Literature

Patent Literature 1: International Publication No. WO 2022/123908

### Summary of Invention

### Technical Problem

However, Patent Literature 1 discloses no concept of preventing reduction in the throughput while avoiding the carry-over when it is necessary to dispense a second reagent after the elapse of a predetermined time from dispensation of a first reagent by using a single dispensing probe. When dispensing a plurality of reagents by the single dispensing probe, such dispensing probe has to be sufficiently cleaned just before dispensing the reagent to avoid the carry-over. An operation for cleaning just before dispensing the reagent, in other words, pre-cleaning requires a period of time as long as the period of time for dispensing the reagent. It is therefore necessary to dispense the reagent immediately after the pre-cleaning. An interval between dispensing operations of the first reagent and the second reagent is set to a predetermined period of time. An inappropriate plan for the pre-cleaning and the subsequent reagent dispensation may reduce the throughput.

It is an object of the present invention to provide an automatic analyzer that prevents reduction in the throughput upon dispensation of a plurality of reagents using one dispensing probe while avoiding the carry-over.

### Solution to Problem

In order to achieve the above object in the present invention, an automatic analyzer that dispenses a plurality of reagents by using one dispensing probe to analyze a sample, includes a classifying unit that classifies a plurality of processes including the dispensation of the reagents into the first processing that requires a pre-cleaning performed on the dispensing probe just before or after the dispensation and second processing that requires no pre-cleaning, and a determining unit that determines an execution time of the first processing and then determines the execution time of the second processing.

### Advantageous Effects of Invention

According to the present invention, an automatic analyzer that prevents reduction in the throughput upon dispensation of a plurality of reagents using one dispensing probe while avoiding the carry-over, can be provided.

### Brief Description of Drawings

Fig. 1 is a schematic view showing a configuration example of an automatic analyzer.
Fig. 2A is a view showing a relation between a biochemical cycle and a dispensing cycle.
Fig. 2B is a view showing dispensation of a second reagent planned after a predetermined elapse of time from the dispensation of a first reagent.
Fig. 3 is a view showing a screen example for setting a combination that requires pre-cleaning.
Fig. 4 is a flow chart showing an example of the processing according to the first embodiment.
Fig. 5A is a table showing an example of analysis items set for every sample.
Fig. 5B is a table showing an example of analysis parameters for every analysis item.
Fig. 6 is a table showing an example of classification results.
Fig. 7A is a table showing an example of priorities of the analysis items.
Fig. 7B is a table showing an example of priorities of the analysis items.
Fig. 8 is a diagram showing the process for planning the dispensation according to the first embodiment.
Fig. 9 is a diagram showing the process for planning the dispensation according to the first embodiment.
Fig. 10 is a diagram showing the results of the dispensation plan according to the first embodiment.
Fig. 11 is a diagram showing the results of the dispensation plan according to a comparison example.
Fig. 12A is a diagram showing the state in which the probe cleaning is planned between two analysis items.
Fig. 12B is a diagram showing the state in which the probe cleaning in Fig. 12A is replaced with the dispensation processing.

### Description of Embodiments

A preferred embodiment of the automatic analyzer according to the present invention will be described with reference to the accompanying drawings. In the following description and drawings, like reference numerals designate components each having an identical function structure, and therefore overlapped descriptions of such components will be omitted.

### First Embodiment

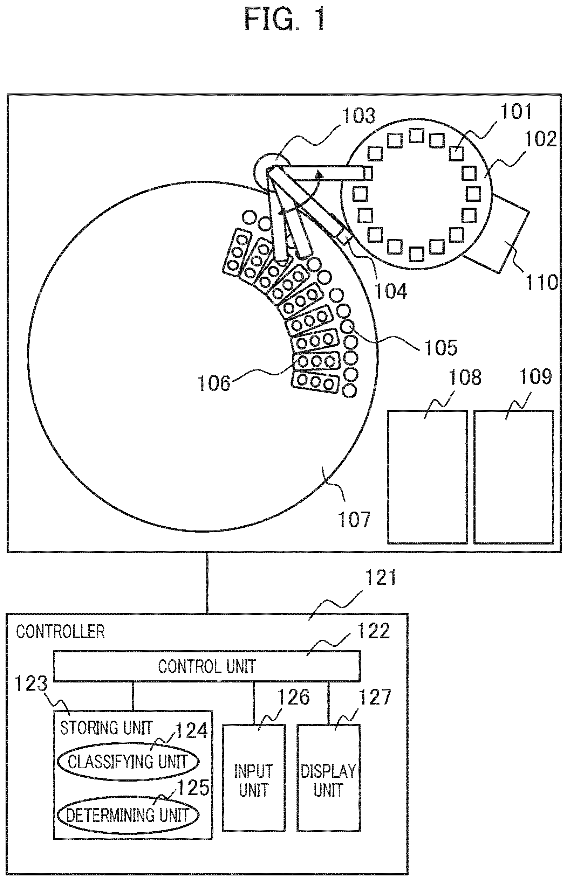

The following describes an example of an entire configuration of the automatic analyzer with reference to Fig. 1. The automatic analyzer is an apparatus for analyzing a sample such as blood and urine collected from a patient, and includes a sample reagent disk 107, a reaction chamber 102, a dispensing unit 103, a cleaning chamber 104, a water supply tank 108, a waste liquid tank 109, a measuring unit 110, and a controller 121. The respective components will be described hereinafter.

The sample reagent disk 107 holds a sample container 105 and a reagent container 106. The sample container 105 contains the sample collected from the patient, and the reagent container 106 contains a plurality of reagents to be reacted with the sample. The sample reagent disk 107 is rotatively driven to move the sample container 105 and the reagent container 106 to a position accessed by the dispensing unit 103.

In the reaction chamber 102, reaction containers 101 into which the sample and the reagent are dispensed are arranged along its circumference. The reaction chamber 102 is rotatively driven to move the reaction container 101 to a position accessed by the dispensing unit 103 or the measuring unit 110. The reaction chamber 102 is held at a predetermined temperature.

The dispensing unit 103 includes a dispensing probe used for dispensing the sample and the reagent, and moves along an arc orbit between the sample reagent disk 107 and the reaction chamber 102. The dispensing probe performs dispensing operations by aspirating the sample from the sample container 105, and the reagent from the reagent container 106, respectively, and discharging the aspirated sample and the aspirated reagent into the reaction container 101. The dispensing probe which has been used for dispensing the sample and the reagent has its inside and outside simply cleaned in the cleaning chamber 104 disposed on the arc orbit. The dispensing probe is simply cleaned in a period of time shorter than the one required for dispensing the sample and the reagent. Pure water used for the simple cleaning of the dispensing probe is supplied from the water supply tank 108. The waste liquid after the cleaning is accumulated in the waste liquid tank 109.

In the reaction container 101 into which the sample and the reagent are discharged, the reaction chamber 102 is held at a predetermined temperature to promote the reaction between the sample and the reagent, thus generating the reaction liquid.

The measuring unit 110 includes a light source for radiating a light ray to the reaction liquid, and a detector for detecting the light transmitting through the reaction liquid, and measures absorbance of the reaction liquid in the reaction container 101. A measurement result of the measuring unit 110 is transmitted to the controller 121.

The controller 121 is a computer that controls operations of the sample reagent disk 107, the reaction chamber 102, the dispensing unit 103, stores measurement results of the measuring unit 110, and displays such measurement results as analysis results. The controller includes a control unit 122, a storing unit 123, an input unit 126, and a display unit 127. The control unit 122 is a computing unit such as a CPU (Central Processing Unit). The storing unit 123 is a storage such as an HDD (Hard Disk Drive) and an SSD (Solid State Drive) for storing a program functioning as a classifying unit 124 and a determining unit 125. The input unit 126 is a device such as a keyboard, a mouse, and a touch panel. The display unit 127 is a device such as a liquid crystal display and a touch panel.

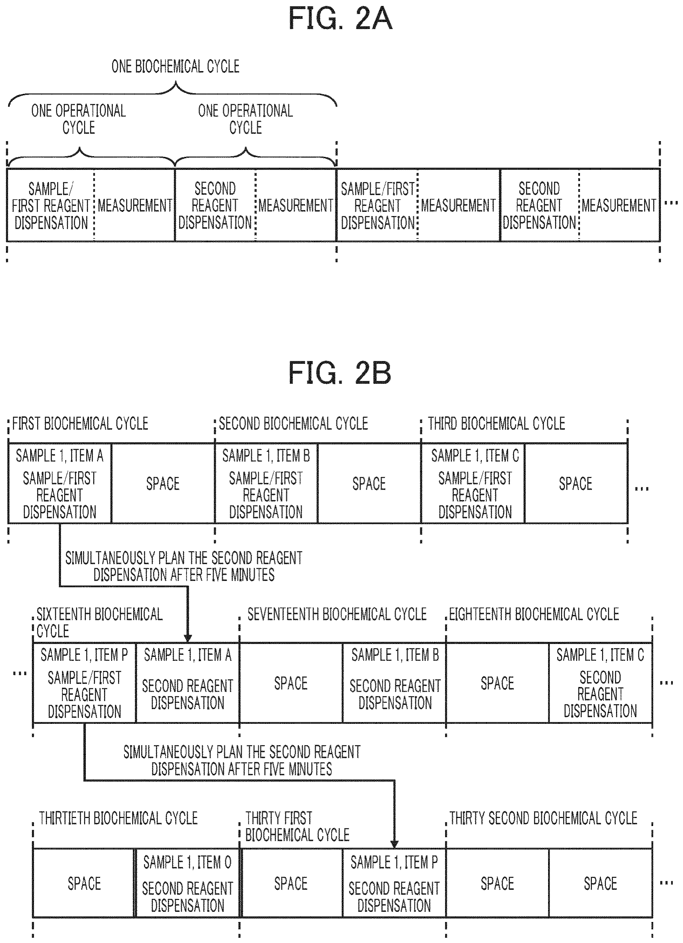

A relationship between a biochemical cycle and a dispensing cycle will be described with reference to Fig. 2A. Fig. 2A illustrates that one biochemical cycle includes an operation for dispensing the sample and a first reagent by the dispensing unit 103, a measuring operation performed by the measuring unit 110, and an operation for dispensing a second reagent by the dispensing unit 103. The sample and the first reagent are dispensed when the reaction chamber 102 is stopped at a first position. The measuring operation is performed during rotation of the reaction chamber 102. The second reagent is dispensed when the reaction chamber 102 is stopped at a second position that is different from the first position. Specifically, the measuring unit 110 performs the measurement, and the dispensing unit 103 performs dispensation in association with the state where the reaction chamber 102 is rotated or stopped. The first reagent is dispensed at the first position in a first half of the biochemical cycle, and the second reagent is dispensed at the second position in a latter half of the biochemical cycle. As the dispensing unit 103 uses one single dispensing probe for dispensing the sample and the reagent, the dispensing unit is simply cleaned in the cleaning chamber 104 just after the dispensation.

Referring to Fig. 2B, the following describes an operation for dispensing the second reagent, which is planned to be performed after the elapse of a predetermined time from an operation for dispensing the first reagent. There may be the case requiring dispensation of the second reagent to be performed after the elapse of a predetermined time from the reaction between the sample and the first reagent for generating the desired reaction liquid. Fig. 2B exemplifies a dispensation plan for the case as described above. Fig. 2B omits illustration of the measuring operation by the measuring unit 110 for simplifying the description.

Referring to the dispensation plan in Fig. 2B, dispensing operations are performed with respect to 16 items A to P for a sample 1 requested for measurement. After the elapse of a predetermined time, that is, five minutes from dispensation of the sample and the first reagent, dispensation of the second reagent is planned. For example, in the first half of the first biochemical cycle, dispensation of the sample and the first reagent for the item A is planned. In the latter half of the 16th biochemical cycle after the elapse of five minutes from the dispensation, dispensation of the second reagent for the item A is planned. In the first half of the second biochemical cycle, dispensation of the sample and the first reagent for the item B is planned. In the latter half of the 17th biochemical cycle after the elapse of five minutes from the dispensation, dispensation of the second reagent for the item B is planned. Dispensing operations for the item C and subsequent items are planned in the similar manner. The cycle in which a dispensing operation is not planned is expressed by a vacant space. In the 16th biochemical cycle, in an interval between dispensation of the first reagent for the item P in the first half and dispensation of the second reagent for the item A in the latter half, the dispensing probe is simply cleaned to avoid the carry-over.

Depending on a certain type of reagent, the simple cleaning of the dispensing probe is insufficient for avoidance of the carry-over. It is therefore necessary to sufficiently clean the dispensing probe just before dispensing the reagent. An operation for cleaning sufficiently just before dispensing the reagent like this, in other words, pre-cleaning requires a period of time as long as the period of time for dispensing the reagent. It is therefore necessary to dispense the reagent immediately after the pre-cleaning. It is possible to set the vacant space cycle in which dispensation is not planned just before and just after the pre-cleaning. For example, the plan may include operations of dispensation, vacant space, pre-cleaning, vacant space, and dispensation in this order. An interval between dispensing operations of the first reagent and the second reagent is set to a predetermined period of time. An inappropriate plan for the pre-cleaning and the subsequent reagent dispensation may reduce the throughput.

In the first embodiment, the pre-cleaning and the subsequent reagent dispensation are planned appropriately to prevent reduction in the throughput while avoiding the carry-over. More specifically, a plurality of operations including dispensation of the sample and the reagent are classified into a group of first processing requiring pre-cleaning, and a group of second processing requiring no pre-cleaning. The execution time of the second processing is determined after determination of the execution time of the first processing. The classifying unit 124 stored in the storing unit 123 classifies operations into the first processing and the second processing. The determining unit 125 determines each execution time for the first processing and the second processing. The classifying unit 124 classifies a plurality of processes based on the preliminarily set combination requiring the pre-cleaning. The combination requiring pre-cleaning may be set by an operator via a set screen.

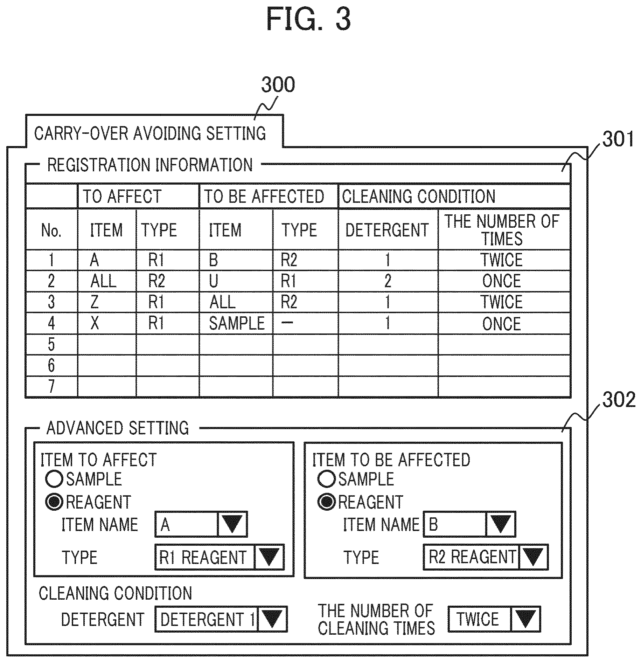

Referring to Fig. 3, the following describes a screen example for setting a combination that requires pre-cleaning. A carry-over avoiding setting screen 300 as shown in Fig. 3 is used for setting the combination of items requiring pre-cleaning for avoiding the carry-over, and includes a registration information column 301 and an advanced setting column 302. The combination requiring pre-cleaning is set in the advanced setting column 302, and the set combination is displayed in the registration information column 301. The respective fields will be described hereinafter.

An affecting item, an affected item, and a cleaning condition are set in the advanced setting column 302. The affecting item represents the one subjected to the dispensation to be performed just before the pre-cleaning, and the affected item represents the one subjected to the dispensation to be performed just after the pre-cleaning. In the case where the pre-cleaning is not performed, the liquid to be dispensed for the affecting item contaminates the liquid to be dispensed for the affected item, and gives an adverse influence on the measurement result of the measuring unit 110.

Either the sample or the reagent is selected for the affecting item and the affected item. If the reagent is selected, the item name of the analysis item and the reagent type are further selected. Options of the item name of the analysis item and the reagent type may be preliminarily registered by an operator. As an option of the item name, ALL may be registered, which possibly influences the reagents for all items, and is possibly influenced by the reagents for all items. As the cleaning condition, the detergent type used for the pre-cleaning and the number of cleaning times are selected. The single cleaning operation corresponds to a single dispensing cycle.

Referring to an example of the advanced setting column 302 of Fig. 3, the reagent, the item A, and the R1 reagent are selected for the affecting items. The reagent, the item B, and the R2 reagent are selected for the affected items. The detergent 1 as the detergent type, and twice as the number of cleaning times are selected for the cleaning condition. The R1 reagent corresponds to the first reagent, and the R2 reagent corresponds to the second reagent.

The set combinations each including the affecting item, the affected item, and the cleaning condition are displayed in the respective rows of the registration information column 301. For example, the row No. 1 indicates the combination set by selection from the advanced setting column 302. The setting in the row No. 1 indicates that pre-cleaning is required in the interval between dispensing operations for the analysis item A and the analysis item B.

The row No. 2 indicates the combination of the affecting item as ALL, that is, all items and the R2 reagent, the affected item as the analysis item U and the R1 reagent, and the cleaning condition as the detergent 2 and once as the number of cleaning times. In the setting of the row No. 1, each of the affecting item and the affected item is limited to one analysis item. In the setting of the row No. 2, the affected item is limited to the analysis item U, but the affecting item is not limited to the single analysis item. In the setting of the row No. 2, the pre-cleaning using the detergent 2 to be performed once is required just before dispensation for the analysis item U irrespective of the analysis item before the analysis item U.

The setting of the row No. 3 indicates the affecting item as the analysis item Z and the R1 reagent, and the affected item as ALL and the R2 reagent. In the row No. 3, the affecting item is limited to the analysis item Z. Meanwhile, the affected item is not limited to the single analysis item. In the setting of the row No. 3, pre-cleaning is required after dispensation for the analysis item Z irrespective of the analysis item subsequent to the analysis item Z. In the similar manner, in the row No. 4, pre-cleaning is required after dispensation for the analysis item X.

The following describes an example of a processing flow according to the first embodiment with respect to each step.

### (S401)

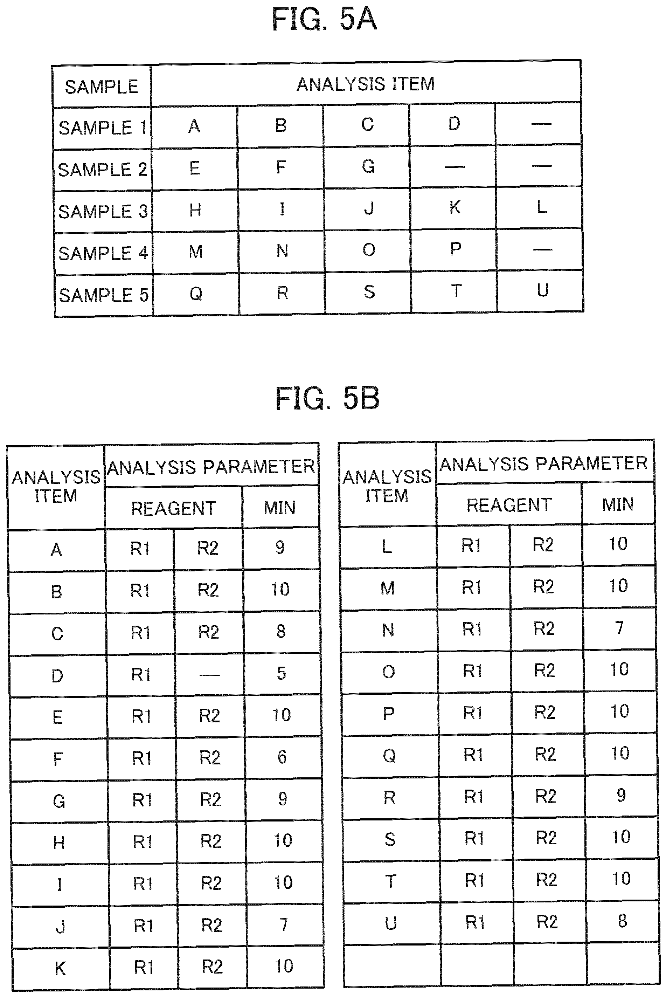

The classifying unit 124 reads the analysis item set for one sample. The analysis item set for the sample is read from a table as shown in Fig. 5A. The table in Fig. 5A shows that the analysis items A to D are set for the sample 1. The analysis items E to G, H to L, M to P, and Q to U are set for the samples 2 to 5, respectively. The table in Fig. 5A is stored in the storing unit 123 as the operator inputs the analysis items for each sample via the input unit 126.

The respective analysis items are associated with analysis parameters, and stored in the storing unit 123 as a table as shown in Fig. 5B. In the table of Fig. 5B, the reagent to be used for each analysis item, and the reaction time, as analysis parameters, are associated with the respective analysis items. As for the analysis item A, the first reagent and the second reagent are used, and the reaction time is set to nine minutes. As for the analysis item D, only the first reagent is used without requiring the second reagent, and the reaction time is set to five minutes.

### (S402)

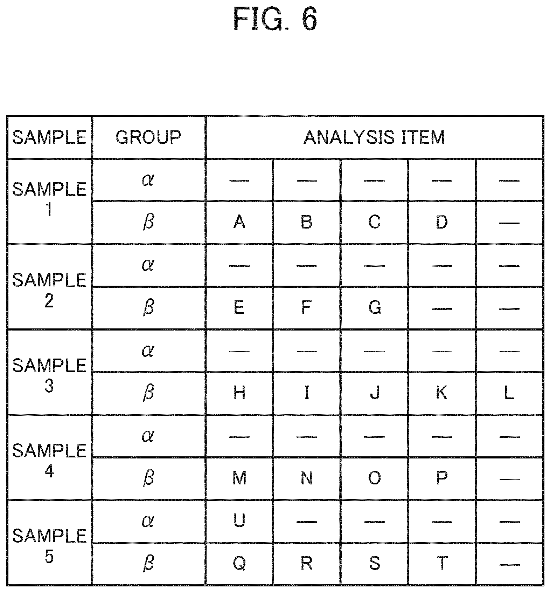

The classifying unit 124 classifies the analysis items read in S401 into a group α of analysis items requiring pre-cleaning and a group β of analysis items requiring no pre-cleaning. The analysis items are classified into the group α and the group β based on the combination set on the carry-over avoiding setting screen 300 as shown in Fig. 3. The classified result is stored in the storing unit 123 as a table as shown in Fig. 6. In the table of Fig. 6, all the analysis items for the samples 1 to 4, and the analysis items Q to T for the sample 5 are classified into the group β. Only the analysis item U for the sample 5 is classified into the group α. The analysis item U for the sample 5 corresponds to the combination in the row No. 2 in the registration information column 301 as shown in Fig. 3. Accordingly, such analysis item is classified into the group α of the analysis items requiring pre-cleaning.

### (S403)

The classifying unit 124 prioritizes the analysis items in order from the longest reaction time in the respective groups as classified in S402. If the reaction time is the same, the original order is kept unchanged. Prioritization of analysis items in order from the longest reaction time advances the execution time of the analysis item with longer reaction time. Accordingly, the throughput can be improved.

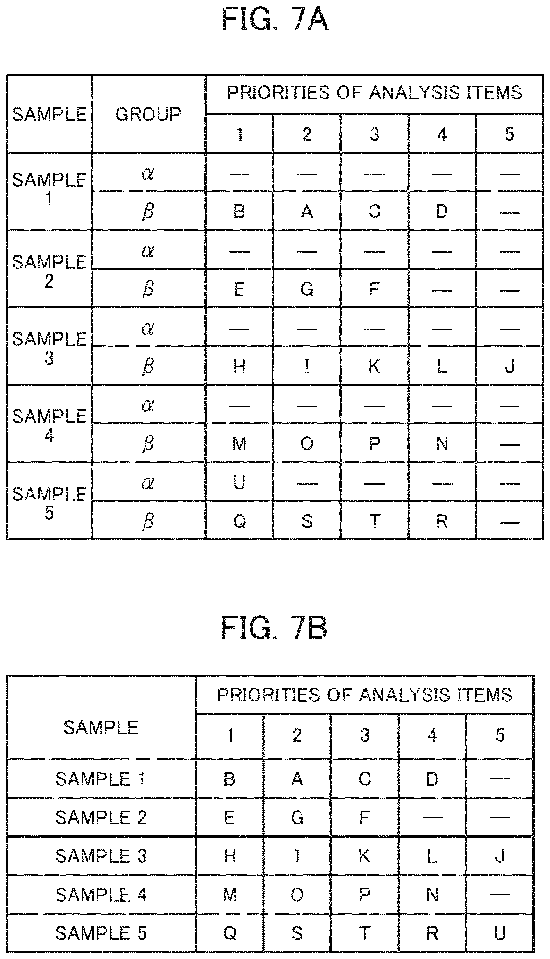

Fig. 7A shows an example of analysis items prioritized in order from the longest reaction time. For example, in the group β for the sample 1, order of the analysis items has been changed from A, B, C, D as shown in Fig. 6 to B, A, C, D in order from the longest reaction time as shown in Fig. 5B. Analogously, in the group β for the sample 2, order of the analysis items has been changed from E, F, G to E, G, F. In the group β for the sample 3, order of the analysis items has been changed from H, I, J, K, L to H, I, K, L, J. In the group β for the sample 5 as classified in S402, order of the analysis items has been changed from Q to T to Q, S, T, R.

Fig. 7B shows results of prioritizing the analysis items which are not classified in S402 in order from the longest reaction time as a comparative example with respect to the example of Fig. 7A. Referring to Fig. 7B, each order of the items for the samples 1 to 4 is the same as the order shown in Fig. 7A. Order of the analysis items Q to U for the sample 5 has been changed to Q, S, T, R, U.

### (S404)

The determining unit 125 determines whether there is any non-registered analysis item requiring pre-cleaning. Specifically, if dispensing operations for the analysis items in the group α classified in S402 are all planned, it is determined that there is no non-registered analysis item. If there is any remaining dispensing operation that is not planned, it is determined that there is a non-registered analysis item. If there is no analysis item classified into the group α, it is determined that there is no non-registered analysis item. If there is no non-registered analysis item, the process proceeds to S408. If there is any non-registered analysis item, the process proceeds to S405.

### (S405)

The determining unit 125 searches for the vacant space cycle as the cycle in which dispensation for the analysis item is not planned. The vacant space cycle is searched at a time before the execution time.

### (S406)

The determining unit 125 determines whether or not the analysis item with the highest priority among the non-registered analysis items can be registered in the vacant space cycle as searched in S405. When operations including the pre-cleaning performed just before dispensation, dispensation of the sample and the first reagent, and dispensation of the second reagent performed after the elapse of a predetermined time from the dispensation of the sample and the first reagent are all assigned to the vacant space cycles, it is determined that the non-registered analysis item can be registered. When any one of those operations is not assigned to the vacant space cycle, it is determined that the non-registered analysis item cannot be registered. If the analysis item with the highest priority among non-registered analysis items can be registered, the process proceeds to S407. If it cannot be registered, the process returns to S405 for advancing the execution time so that the vacant cycle is searched again.

### (S407)

The determining unit 125 assigns the analysis item with the highest priority among the non-registered analysis items to the vacant space cycle searched in S405 to determine the execution time of the analysis item.

### (S408)

The determining unit 125 determines whether or not there is any non-registered analysis item requiring no pre-cleaning. Specifically, if dispensing operations for the analysis items in the group β classified in S402 are all planned, it is determined that there is no non-registered analysis item. If there is a remaining dispensing operation that is not planned, it is determined that there is a non-registered analysis item. If there is no analysis item classified into the group β, it is determined that there is no non-registered analysis item. If there is no non-registered analysis item, the process proceeds to S412. If there is any non-registered analysis item, the process proceeds to S409.

### (S409)

The determining unit 125 searches for the vacant space cycle as the cycle in which dispensation for the analysis item is not planned. The vacant space cycle is searched at a time before the execution time.

### (S410)

The determining unit 125 determines whether or not the analysis item with the highest priority among the non-registered analysis items can be registered in the vacant space cycle as searched in S409. When dispensation of the sample and the first reagent, and dispensation of the second reagent performed after the elapse of a predetermined time from the dispensation of the sample and the first reagent are assigned to the vacant space cycles, it is determined that the analysis item can be registered. If any one of dispensing operations is not assigned to the vacant space cycle, it is determined that the analysis item cannot be registered. If the analysis item with the highest priority among non-registered analysis items can be registered, the process proceeds to S411. If it cannot be registered, the process returns to S409 for advancing the execution time so that the vacant cycle is searched again.

### (S411)

The determining unit 125 assigns the analysis item with the highest priority among the non-registered analysis items to the vacant space cycle searched in S409 to determine the execution time for the analysis item.

### (S412)

The determining unit 125 determines whether or not there is any sample with non-registered analysis item. Specifically, if dispensing operations for the analysis items of any of the samples are all planned, it is determined that there is no non-registered sample. If there is a remaining analysis item that is not planned, it is determined that there is a non-registered sample. If there is a non-registered sample, the process returns to S401 in which the analysis item for one of the non-registered samples is read. If there is no non-registered sample, the process ends.

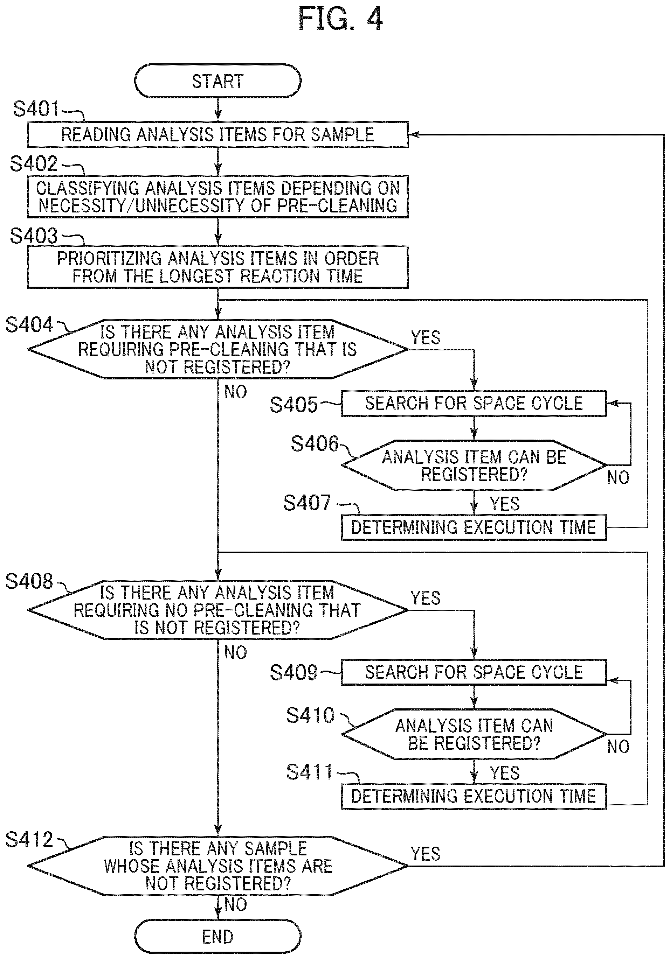

The processing flow as described with reference to Fig. 4 determines the execution time of the first processing as the analysis item requiring pre-cleaning, and then determines the execution time of the second processing as the analysis item requiring no pre-cleaning. This prevents reduction in the throughput while avoiding the carry-over.

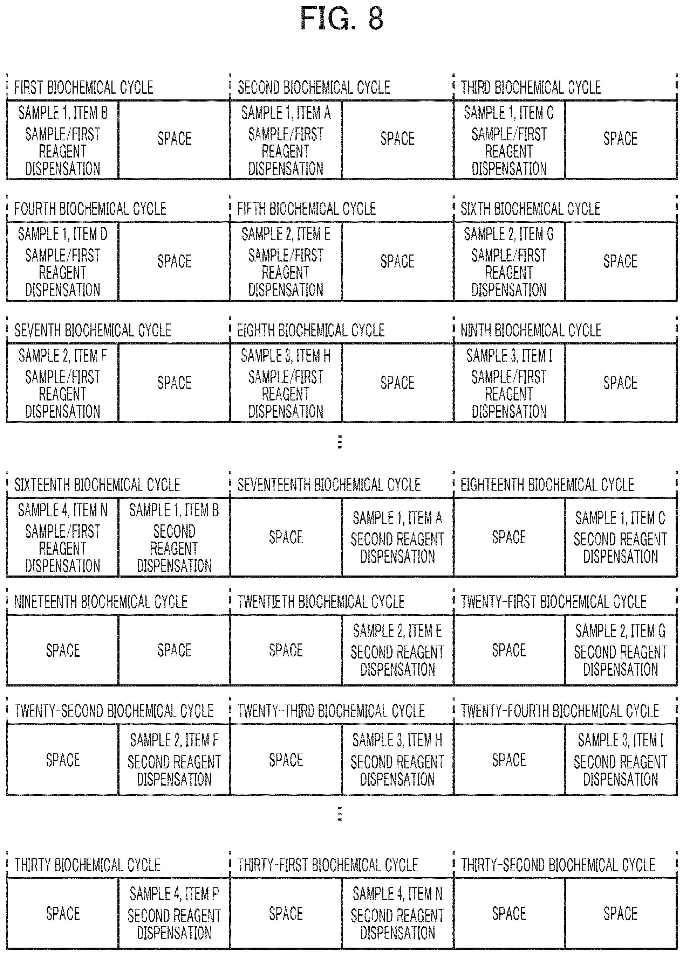

With reference to Figs. 8 to 10, the following describes a specific example of the process for determining the execution time of the analysis item set for the sample. The analysis items set for the samples 1 to 5 are classified into the group α and the group β, which are prioritized as shown in Fig. 7A.

Fig. 8 shows the state in which dispensing operations for the analysis items set for the samples 1 to 4 are all planned. As the analysis items set for the samples 1 to 4 are classified into the group β requiring no pre-cleaning, dispensation for the analysis item is planned by executing steps from S409 to S411 while skipping execution of steps from S405 to S407 as shown in Fig. 4. As priority is given in order from the longest reaction time, the analysis items for the sample 1 are planned to be prioritized in order of B, A, C, D. More specifically, dispensation of the sample 1 and the first reagent is assigned to the first half of the first biochemical cycle. Dispensation of the second reagent is assigned to the latter half of the 16th biochemical cycle after the elapse of a predetermined time, that is, five minutes. As shown in Fig. 5B, the analysis item D does not require dispensation of the second reagent. The vacant space cycle is assigned to the latter half of the 19th biochemical cycle after the elapse of a predetermined time from the first half of the fourth biochemical cycle to which the dispensation of the sample 1 and the first reagent is assigned. The vacant space cycle is assigned to each first half of cycles from the 20th biochemical cycle to the 31st biochemical cycle to which dispensation of the second reagent for the analysis item N with the lowest priority among the analysis items for the sample 4 is assigned. Dispensation of the second reagent for any of the combinations is assigned to each latter half of the cycles.

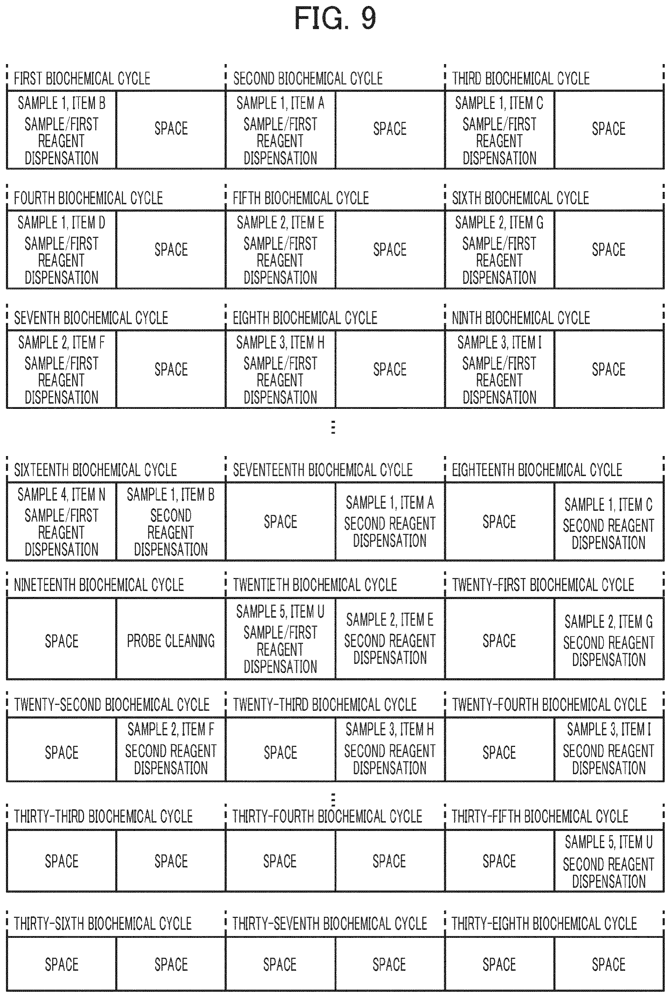

Fig. 9 shows the state of the dispensation plan for the analysis item U set for the sample 5. As the analysis item U is classified into the group α requiring pre-cleaning, operations of the pre-cleaning, dispensation of the sample and the first reagent, and dispensation of the second reagent are planned by executing steps from S405 to S407 as shown in Fig. 4. More specifically, the pre-cleaning and the respective dispensing operations are not assigned to the vacant space cycles searched from the first biochemical cycle to the 18th biochemical cycle. Accordingly, the 19th biochemical cycle is further searched for the vacant space cycle. The probe cleaning as the pre-cleaning is assigned to the latter half of the 19th biochemical cycle. Dispensation of the sample 5 and the first reagent is assigned to the first half of the subsequent 20th biochemical cycle, and dispensation of the second reagent is assigned to the latter half of the 35th biochemical cycle after the elapse of a predetermined time from the previous dispensation.

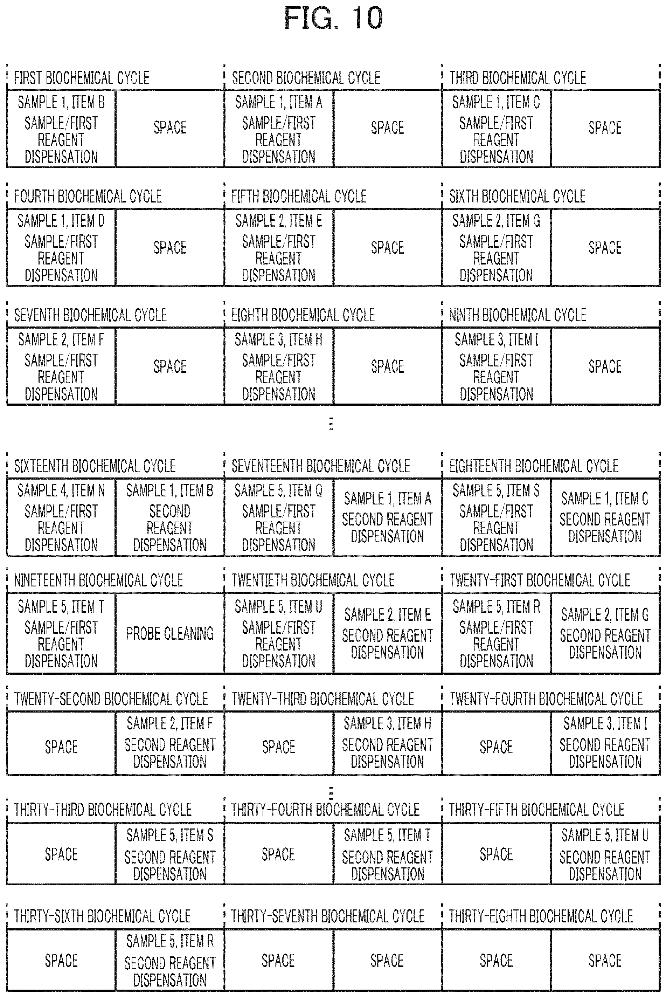

Fig. 10 shows the state of the dispensation plan for the remaining analysis items set for the sample 5. The remaining analysis items Q, S, T, R are classified into the group β requiring no pre-cleaning. Dispensation of the sample and the first reagent, and dispensation of the second reagent are planned by executing steps from S409 to S411 as shown in Fig. 4. More specifically, as the respective dispensing operations are not assigned to the vacant space cycles searched from the first biochemical cycle to the 16th biochemical cycle, the 17th biochemical cycle is further searched for the vacant space cycle. Dispensation of the sample 5 and the first reagent for the analysis item Q is assigned to the first half of the 17th biochemical cycle. Dispensation of the second reagent is assigned to the latter half of the 32nd biochemical cycle after the elapse of a predetermined time from the previous dispensation. The respective dispensing operations for the analysis item S are assigned to the first half of the 18th biochemical cycle and the latter half of the 33rd biochemical cycle, respectively. The respective dispensing operations for the remaining analysis items T, R are assigned as shown in Fig. 10. As a result, all dispensing operations up to the 36th biochemical cycle are completed.

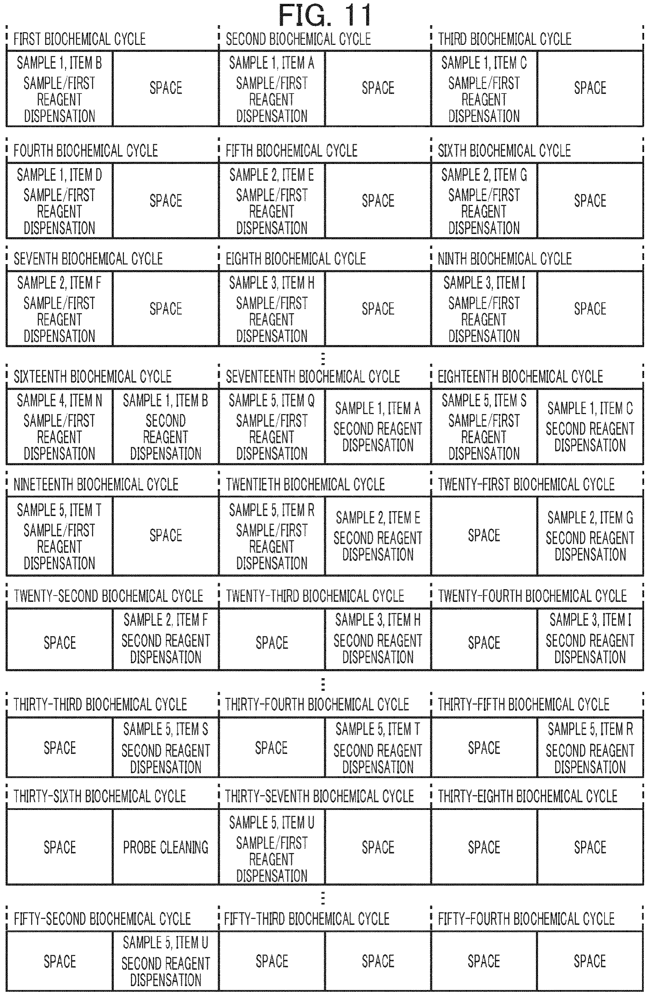

Fig. 11 shows the state as a comparative example, in which dispensing operations for the analysis items are planned without classification based on the need for pre-cleaning. If the classification is not performed based on the need for pre-cleaning, dispensation of the sample and the first reagent, and dispensation of the second reagent are planned in accordance with the priority order as shown in Fig. 7B, for example. More specifically, dispensation of the sample and the first reagent for the analysis items except the analysis item U are assigned to the respective first halves of the cycles from the first biochemical cycle to the 20th biochemical cycle. Dispensation of the second reagent is assigned to the respective latter halves of the cycles from the 16th biochemical cycle to the 35th biochemical cycle. The remaining analysis item U requires pre-cleaning. The pre-cleaning is assigned to the latter half of the 36th biochemical cycle without being assigned to the cycles from the first biochemical cycle to the 35th biochemical cycle. Dispensation of the sample and the first reagent is assigned to the first half of the 37th biochemical cycle. Dispensation of the second reagent is assigned to the latter half of the 52nd biochemical cycle after the elapse of a predetermined time, that is, five minutes from the first half of the 37th biochemical cycle.

Compared with the comparative example as shown in Fig. 11, the dispensing plan as shown in Fig. 10 can reduce the period of time taken until completion of all dispensing operations by approximately five minutes. According to the first embodiment, the automatic analyzer that prevents reduction in the throughput upon dispensation of a plurality of reagents using one dispensing probe while avoiding the carry-over, can be provided.

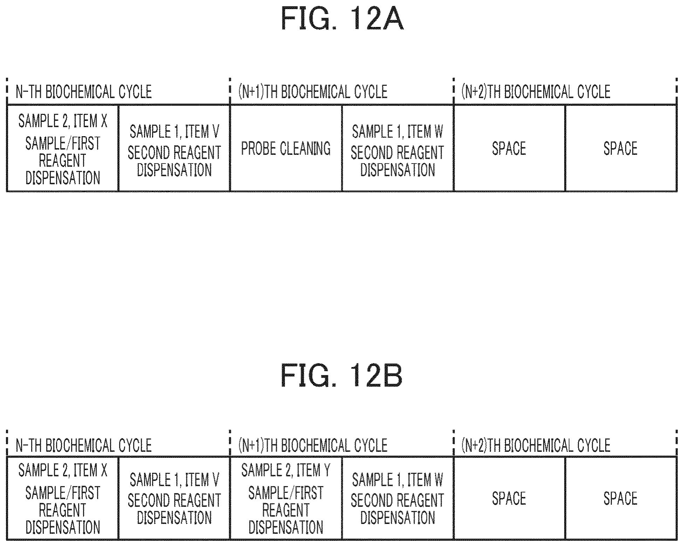

If there is any dispensing processing alternative to the pre-cleaning, the pre-cleaning may be replaced with such dispensing processing. Fig. 12A shows a state of the plan for performing the probe cleaning in the interval between dispensing operations for analysis items V and W. In this case, the analysis items V and W constitute a combination that requires pre-cleaning. The liquid to be dispensed for the analysis item V will contaminate the liquid to be dispensed for the analysis item W. If the liquid dispensed for the analysis item Y is not contaminated by the liquid dispensed for the analysis item V, and does not contaminate the liquid dispensed for the analysis item W, it is possible to replace the pre-cleaning with the dispensing processing for the analysis item Y. Fig. 12B shows the state in which the dispensing processing for the analysis item Y replaces the probe cleaning planned to be performed in the interval between dispensing operations for the analysis items V and W. Such replacement allows reduction in consumption of the detergent used for the probe cleaning, and improvement in the throughput corresponding to one cycle.

The embodiment of the present invention has been described. The present invention is not limited to the above-described embodiment, but is allowed to modify the component without departing from the scope of the present invention. It is also possible to appropriately combine a plurality of components as disclosed in the embodiment. Further, it is also possible to remove some components from all the components as described in the embodiment.

### List of Reference Signs

101: reaction container, 102: reaction chamber, 103: dispensing unit, 104: cleaning chamber, 105: sample container, 106: reagent container, 107: sample reagent disk, 108: water supply tank, 109: waste liquid tank, 110: measuring unit, 121: controller, 122: control unit, 123: storing unit, 124: classifying unit, 125: determining unit, 126: input unit, 127: display unit, 300: carry-over avoiding setting screen, 301: registration information column, 302: advanced setting column

## Claims

1. An automatic analyzer for analyzing a sample after dispensing a plurality of reagents with one dispensing probe, comprising:
a classifying unit that classifies a plurality of processes including the dispensation of the reagent into first processing requiring a pre-cleaning that is performed on the dispensing probe just before or after the dispensation and second processing requiring no pre-cleaning; and
a determining unit that determines an execution time of the first processing and then determines the execution time of the second processing.

2. The automatic analyzer according to claim 1, wherein
the classifying unit prioritizes each of the classified first processing and second processing in order of the longest reaction time.

3. The automatic analyzer according to claim 1, wherein
the classifying unit classifies the above processes into the first processing and the second processing, according to a predetermined combination that requires the pre-cleaning.

4. The automatic analyzer according to claim 1, wherein
the determining unit replaces the pre-cleaning with such dispensing processing that is not contaminated by the liquid dispensed just before the pre-cleaning and that does not contaminate the liquid to be dispensed just after the pre-cleaning.

5. The automatic analyzer according to claim 1, wherein
the first processing is processing that requires the pre-cleaning before a specified analysis item is performed, whatever analysis item it is before the specified analysis item, or processing that requires the pre-cleaning after a specified analysis item, whatever analysis item it is after the specified analysis item.
